# EUROPEAN PATENT SPECIFICATION

(11) **EP 1 786 196 B1**
(45) Date of publication and mention of the grant of the patent: **26.01.2011**
(21) Application number: 06255722.8
(22) Date of filing: 07.11.2006
(51) Int. Cl.: H04N 1/44

(54) **Image processing apparatus, image managing method, document managing apparatus, and document managing method**
Bildverarbeitungsvorrichtung, Bildverwaltungsverfahren, Dokumentverwaltungsvorrichtung und -Verfahren
Dispositif de traitement d'image, procédé d'administration d'image, dispositif et procédé d'administration de document

(30) Priority: 10.11.2005 JP 2005326253
(43) Date of publication of application: 16.05.2007
(73) Proprietor: CANON KABUSHIKI KAISHA, Tokyo (JP)
(72) Inventor: Miyata, Junichi, Tokyo (JP)
(74) Representative: Hitching, Peter Matthew

(56) References cited:
- EP-A- 1 374 009
- JP-A- 2001 334 722
- US-A- 5 287 203

## Description

### BACKGROUND OF THE INVENTION

### Field of the Invention

The present invention relates particularly, though not exclusively, to an image processing apparatus, an image managing method, a document managing apparatus, a document managing method, and a computer program, for processing of image data for a document including confidential parts or of an electronic document including confidential parts.

### Description of the Related Art

Recently, it has become possible to digitize paper documents including confidential information by the use of image copying apparatuses (for example, digital color multifunction machines). Such digital documents can be managed by electronic document systems.

In addition, since the use of personal information is spreading with increasing computerization in recent years, the importance of managing confidential data, such as personal information, is increasing. For example, in workflows in which personal information concerning clients is input using sheets of paper and which are adopted in, for example, window services at public offices or banks, it is highly necessary to ensure the confidentiality of the paper documents. The confidential information includes information that should be accessed only by authorized users. Accordingly, there is an increasing need to ensure the confidentiality of information by restricting access to the confidential information. In other words, there is an increasing need to improve the security by permitting only authorized users to access confidential information.

In a first common method of restricting access to confidential information, a password is set to a confidential document itself. In this method, the document can be opened only after the password set to the confidential document is authenticated.

In a second common method of restricting access to confidential information, a storage unit, such as a hard disk, is encrypted and only authorized users are permitted to decrypt the encrypted storage unit to restrict access to confidential information.

In a third common method of restricting access to confidential information, an access right is granted to users who are authorized to access a document and access to the document is permitted only after server authentication on the basis of the granted access right is performed to restrict access to confidential information.

A method of converting confidential information into a protected format, and indicating that the confidential information is converted into the protected format in order to permit only authorized users to browse the confidential information, is disclosed in Japanese Patent Laid-Open No. 2004-58410. With this method, the authorized users can acknowledge the presence of the confidential information to access the confidential information and, therefore, only the authorized users can easily browse the confidential information.

The above known methods have the following problems. For example, when a password is used to restrict access to a document, any leakage of the password results in potential leakage of confidential information in the document. In addition, it is difficult to perform tracking of the distributed document. Furthermore, all the documents (electronic data) including the confidential information must be managed. Consequently, even if the confidential information occupies only a small part of the entire document, all the pages in the document must be managed, thus increasing the size of the file used in the management of the document.

US-A-5,287,203 discloses an image processing apparatus having a secure document generating unit and a storage unit. When an encoding process for the digital image is selected, according to the instruction; a decoding part transforms the digital image to a decoded image when a decoding process for the digital image is selected according to the instruction. A second storage part is arranged to store the encoded image in accordance with a memory address determined based on the password number when the encoding process is selected, and for storing the decoded image in accordance with the memory address determined based on the password number when the decoding process is selected. An output part outputs either the encoded image or the decoded image onto a recording medium so that either an image encoded from the original image or an image decoded from the encoded image is recorded.

JP 2001 334722 discloses an image processing apparatus, in which the problem to be solved is the provision of an image forming device to protect not only printed papers but also confidential documents and papers, which are transmitted by communication means when a receiver wants to make the printed papers confidential. The image formation device has a paper cassette for storing and feeding transfer sheets, optical parts and data receiving parts for receiving image information for printing on the transfer sheet, a photoreceptor and a developing device 8 for printing the image information on papers delivered from the cassette, and a means for storing the printed papers. The storing means has a confidential printed paper discharge part for storing the printed confidential documents and a paper discharge tray for storing documents other than confidential documents wherein the confidential documents and other documents can be separately stored. The discharge tray holds the confidential printed papers so as not to recognize the content by a secrecy prevention means, which is canceled by a prescribed cancelling process.

### SUMMARY OF THE INVENTION

The present invention realizes both reliable protection of confidential information and easy management of the confidential information. Image data for a scanned document or an electronic document is divided into a secure document and a non-secure document, and the secure document and the non-secure document are stored in different locations specified by a user. The non-secure document that is stored in the above manner does not include the entity of secure pages. Accordingly, it is not possible to refer to each page in the secure document from the non-secure document unless the non-secure document is stored in a location to which the secure document can refer. In addition, since only the file of the secure document is managed as the confidential information, the size of the file to be managed as the confidential information can be reduced, compared with a case where the entire document is managed as the confidential information.

According to a first aspect of the present invention, there is provided an image processing apparatus as specified in claims 1 to 6.

According to a second aspect of the present invention, there is provided an image managing method as specified in claims 7 to 12.

According to another aspect of the present invention, there is provided a computer program as specified in claim 13.

According to another aspect of the present invention, there is provided a storage medium as specified in claim 14.

Further features of the present invention will become apparent from the following description of exemplary embodiments with reference to the attached drawings.

### BRIEF DESCRIPTION OF THE DRAWINGS

The accompanying drawings, which are incorporated in and constitute a part of the specification, illustrate embodiments of the invention and, together with the description, serve to explain the principles of the invention.

Fig. 1 is a block diagram showing an example of the configuration of a system including an image forming apparatus according to the first embodiment of the present invention and computers.

Fig. 2 is a block diagram showing an example of the configuration of a core section in the image forming apparatus according to the first embodiment of the present invention.

Fig. 3 is a block diagram conceptually showing an example of software configuration of a control program stored in the core section (memory) in the image forming apparatus according to the first embodiment of the present invention.

Fig. 4 is a block diagram conceptually showing an example of the software configuration of the control program with a division scanning application being loaded as an additional application.

Fig. 5 is a block diagram showing an example of the software configuration in the division scanning application.

Fig. 6 shows an example of a screen (user interface) displayed in an operating unit in the image forming apparatus according to the first embodiment of the present invention.

Fig. 7 shows an example of a user interface displayed when a user depresses a button used for setting a destination of a secure document.

Fig. 8 shows an example of a user interface displayed when the user depresses a button used for setting a destination of a non-secure document.

Fig. 9 shows an example of a user interface displayed when the user depresses a button used for specifying a page to be divided into the secure document by word specification.

Fig. 10 shows an example of a user interface displayed when the user depresses a button used for specifying a page to be divided into the secure document by page specification.

Fig. 11 conceptually shows an example of the structure of a document that is divided into the secure document and the non-secure document by the division scanning application.

Fig. 12 conceptually shows an example of the structure of the secure document and the non-secure document shown in Fig. 11.

Fig. 13 shows examples of the structures of the secure document and the non-secure document.

Fig. 14 is a flowchart showing an example of a process performed by the division scanning application.

Fig. 15 is a flowchart showing an example of a process of determining how to divide pages.

Fig. 16 shows examples of the secure document and the non-secure document.

Fig. 17 is a block diagram showing an example of the configuration of a system including an image forming apparatus and computers according to a second embodiment of the present invention.

Fig. 18 is a block diagram conceptually showing an example of the relationship between a Native unit and a virtual application unit in the image forming apparatus according to the second embodiment of the present invention.

Fig. 19 shows an example of a screen (user interface) displayed in an operating unit in the image forming apparatus according to the second embodiment of the present invention.

Fig. 20A shows an example of the structure of the secure document and Fig. 20B shows an example of the structure of the non-secure document, according to the second embodiment of the present invention.

Fig. 21 is a flowchart showing an example of a process performed by a secure scanning application according to the second embodiment of the present invention.

Fig. 22 conceptually shows an example of the structure of a one-page document divided into a secure document for storage and a non-secure document for distribution according to the second embodiment of the present invention.

### DESCRIPTION OF THE EMBODIMENTS

Preferred embodiments of the present invention will be described in detail with reference to the accompanying drawings.

### First Embodiment

A first embodiment of the present invention will now be described with reference to the drawings.

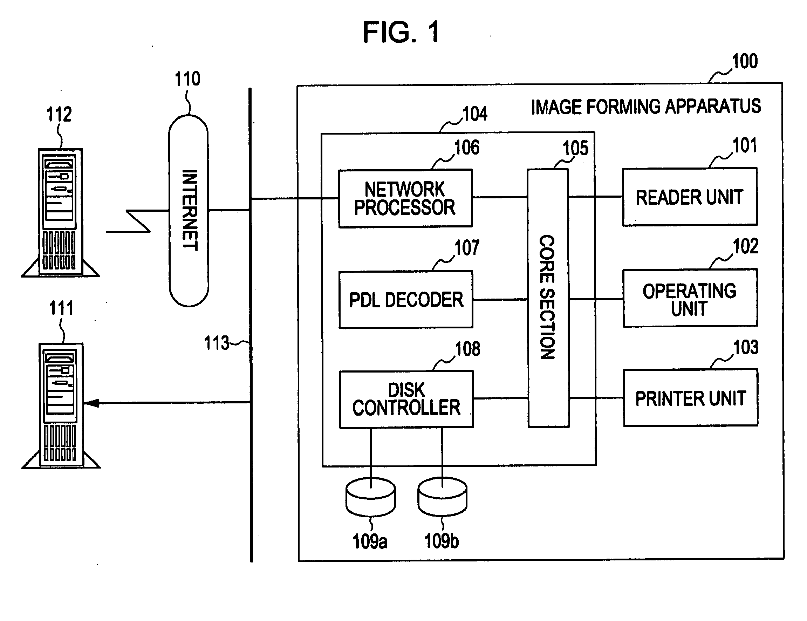

Fig. 1 is a block diagram showing an example of the configuration of a system including an image forming apparatus, which is an example of an image processing apparatus according to the first embodiment of the present invention, and computers (information processing apparatuses). The image forming apparatus is exemplified by a digital multifunction machine having a function of a copier machine.

Referring to Fig. 1, an image forming apparatus 100 includes a reader unit 101, an operating unit 102, a printer unit 103, a controller unit 104, and storage units 109a and 109b. The controller unit 104 includes a network processor 106, a page descriptive language (PDL) decoder 107, a disk controller 108, and a core section 105.

An information processing apparatus 112 connected to the Internet 110 and an information processing apparatus 111 are connected to each other over a network 113, such as an intranet. The information processing apparatuses 111 and 112 can be realized by, for example, workstations (WSs) or standard personal computers (PCs).

The reader unit 101 in the image forming apparatus 100 scans a document set in the image forming apparatus 100 to read out an image of the document and supplies image data corresponding to the readout image of the document to the printer unit 103 through the core section 105. The printer unit 103 records an image corresponding to the image data supplied from the reader unit 101 on a recording sheet of paper.

The operating unit 102 includes, for example, a liquid crystal panel having a function of a touch pad. A user can touch the touch pad with his finger to select a key associated with a predetermined instruction used for controlling the image forming apparatus 100.

The controller unit 104 converts the image of the document, read out (scanned) by the reader unit 101, into a universal electronic document format, such as Portable Document Format (PDF) or Extensible Markup Language (XML), through the core section 105. The controller unit 104 then supplies the data converted into the universal electronic document format to the disk controller 108. The disk controller 108 receives the data converted into the universal electronic document format and stores the received data in a hard disk drive (HDD), which is an example of the storage unit 109a or 109b.

The controller unit 104 can transmit the data converted into the universal electronic document format to the Internet 110 through the network processor 106 or to the information processing apparatus 111 connected to the network 113. The transmitted data is stored in a storage unit (not shown) in the information processing apparatus 111 or 112.

As described above, the information processing apparatuses 111 and 112 according to the first embodiment of the present invention are personal computers or workstations (PCs/WSs). The information processing apparatuses 111 and 112 generate PDL print data that can be interpreted by the PDL decoder 107 in the image forming apparatus 100 by the use of software, such as a printer driver, that is installed in advance. The generated PDL print data is transmitted to the core section 105 through the network 113 and the network processor 106. The PDL decoder 107 decodes the PDL print data into image data that can be recorded on the recording sheet of paper in the printer unit 103 and supplies the decoded image data to the printer unit 103 through the core section 105. The printer unit 103 records an image corresponding to the image data supplied in the above manner on the recording sheet of paper. The image forming apparatus 100 according to the first embodiment of the present invention can print the image on the basis of the PDL print data transmitted from the information processing apparatus 111 or 112, in addition to the image for the document scanned by the reader unit 101, in the manner described above.

Furthermore, as described above, the image of the document scanned by the reader unit 101 can be converted into the universal electronic document format thorough the core section 105 and the converted image can be stored in the storage unit (not shown) in the information processing apparatus 111 or 112. The information processing apparatuses 111 and 112 are exemplified by hard disk drives.

The configuration of the system is not limited to the one shown in Fig. 1.

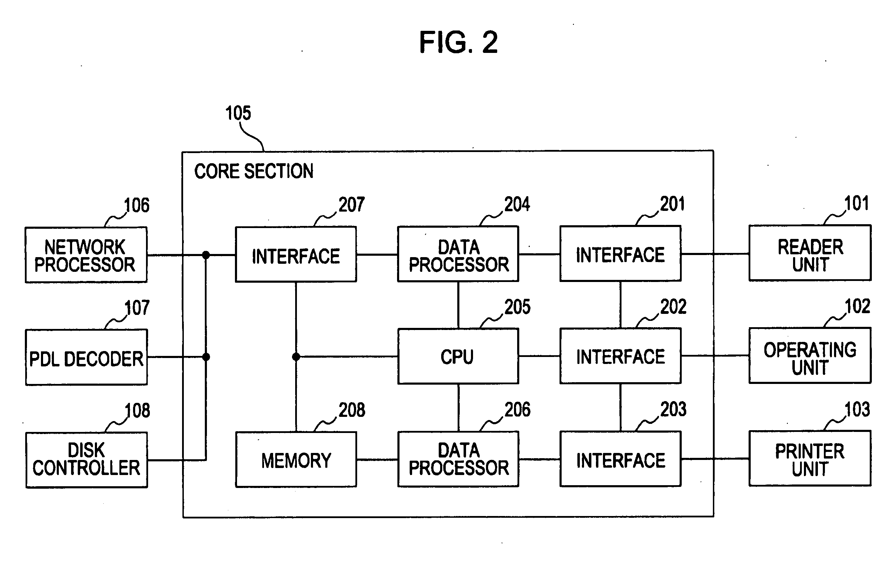

Fig. 2 is a block diagram showing an example of the configuration of the core section 105 in the image forming apparatus 100 according to the first embodiment of the present invention. Referring to Fig. 2, the core section 105 includes interfaces 201, 202, 203, and 207, data processors 204 and 206, a central processing unit (CPU) 205, and a memory 208.

In the core section 105 having the above components, the image data for the document scanned by the reader unit 101 is transferred to the data processor 204 through the interface 201. The data processor 204 performs data processing including rotation and variable magnification of the image when the image is to be printed in the printer unit 103. The image data transferred to the data processor 204 is stored in the memory 208 as digital data under the control of the CPU 205. When a user inputs an internal control command corresponding to a function of the copier machine with the operating unit 102, the image data transferred to the data processor 204 is transferred to the printer unit 103 through the CPU 205, the data processor 206, and the interface 203 in response to the internal control command and is recorded (printed) on the recording sheet of paper in the printer unit 103.

When the user inputs an internal control command corresponding to a function of the copier machine with the operating unit 102, the image data read out by the reader unit 101 is transferred to the data processor 204 through the interface 201 in response to the internal control command. The data processor 204 converts the transferred image data into a universal electronic document format, such as PDF or XML. The image data transferred to the data processor 204 is stored in the memory 208 as digital data under the control of the CPU 205. The image data transferred to the data processor 204 is also transferred to the disk controller 108 through the interface 207 under the control of the CPU 205 in response to the internal control command corresponding to the function specified by the user with the operating unit 102. The image data transferred to the data processor 204 can be stored in the storage unit 109a or 109b.

The image data read out by the reader unit 101 is transferred to the data processor 204 through the interface 201 in response to the internal control command corresponding to the function specified by the user with the operating unit 102. The data processor 204 converts the transferred image data into a universal electronic document format, such as PDF or XML. The image data transferred to the data processor 204 is stored in the memory 208 as digital data under the control of the CPU 205. The data processor 204 further transfers the transferred image data to the network processor 106 through the interface 207 under the control of the CPU 205 in response to the internal control command corresponding to the function specified by the user with the operating unit 102. The network processor 106 stores the image data transferred from the data processor 204 in the information processing apparatus 111 connected to the network 113 or in the information processing apparatus 112 connected to the Internet 110.

The PDL data generated in the information processing apparatus 111 or 112 is transmitted to the image forming apparatus 100 through the network processor 106. The transmitted PDL data is transferred to the CPU 205 through the interface 207 and is transferred again to the PDL decoder 107 through the interface 207. The PDL decoder 107 decodes the transferred PDL data into bitmap data. The bitmap data is stored in the memory 208 through the interface 207 and the CPU 205. The bitmap data is, then, transferred to the printer unit 103 through the CPU 205, the data processor 206, and the interface 203. The printer unit 103 prints the transferred bitmap data.

The CPU 205 performs the control processing described above in accordance with a control program stored in the memory 208 and the internal control command received from the operating unit 102 through the interface 202. The memory 208 is also used as a working area of the CPU 205. The image forming apparatus 100 according to the first embodiment of the present invention can perform the processing which centers on the core section 105 and in which the readout of the image of the document, the printing of the image, the transmission and reception of the image, the storage of the image, the transmission and reception of data between the information processing apparatuses 111 or 112 and the image forming apparatus 100, and so on are combined.

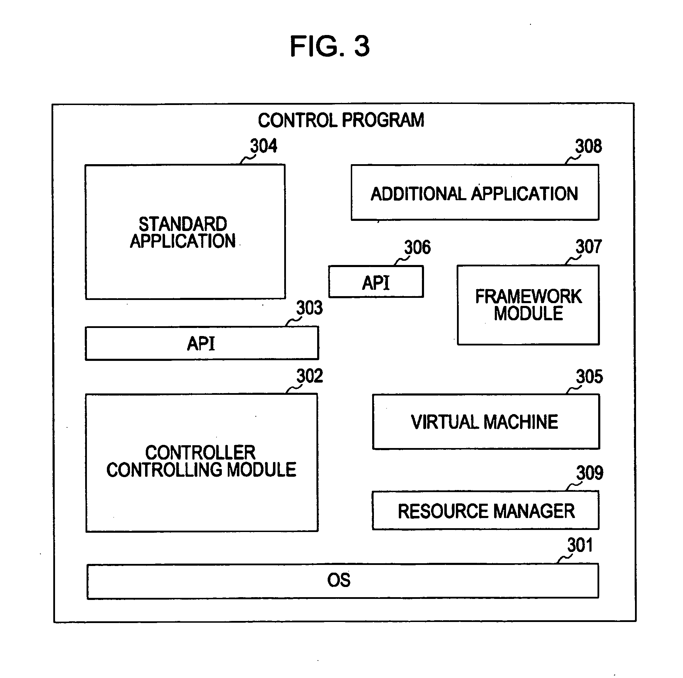

Fig. 3 is a block diagram conceptually showing an example of a software configuration of the control program stored in the core section 105 (memory 208) in the image forming apparatus 100 according to the first embodiment of the present invention.

Referring to Fig. 3, an operating system 301 is an example of a first execution environment in which the entire image forming apparatus 100 is controlled. The operating system is hereinafter abbreviated to "OS". The OS 301 generally includes modules of a real-time OS capable of controlling various functions of the copier machine in real time or a group of libraries capable of instructing the CPU 205 to control the optional units of the copier machine and various functions including an expansion card. The OS 301 is realized by a group of modules providing interface commands to higher-level applications.

A controller controlling module 302 in the control program runs on the OS 301. The controller controlling module 302 according to the first embodiment of the present invention includes modules controlling the reader unit 101, the printer unit 103, the PDL decoder 107, the disk controller 108, the network processor 106, and so on.

An application programming interface 303 is a collection of interfaces corresponding to multiple control commands used for accessing the controller controlling module 302 controlled by the OS 301. The application programming interface is hereinafter abbreviated to "API". The API 303 has a function of providing a process of accessing the controller controlling module 302 in response to an instruction to control the image forming apparatus 100, received from a standard application 304.

The standard application 304 runs on the OS 301. The standard application 304 asks the controller controlling module 302 via the API 303 to perform a variety of processing tasks to realize the functions of the copier machine. Specifically, the standard application 304 has functions for realizing the functions which the image forming apparatus 100 is normally provided with. For example, the standard application 304 has a function for realizing a copy function. The copy function means that the reader unit 101 scans a document and the printer unit 103 outputs an image of the scanned document on a recording medium.

A virtual machine 305 is an example of a second execution environment in which a special application that is installed is executed. The virtual machine 305 is realized by, for example, a Java virtual machine. An API 306 is used by an additional application 308 on the virtual machine 305 to access the controller controlling module 302 running on the OS 301. According to the first embodiment of the present invention, the API 306 functions as an intermediator that invokes the API 303. The API 306 may be the same as the API 303 or may have a restricted function as a subset of the API 303.

A framework module 307 has control over the additional application 308 on the virtual machine 305.

The additional application 308 is installed in the virtual machine 305 to run and can ask the controller controlling module 302 via the API 306 to perform a variety of processing depending on the image forming apparatus 100. The additional application 308 can also ask the reader unit 101 via the API 306 to scan a document. In addition, the additional application 308 can ask the information processing apparatus 111 connected to the network 113 or the information processing apparatus 112 connected to the Internet 110 via the network processor 106 to transmit data. The additional application 308 can communicate with the disk controller 108.

A resource manager 309 runs on the OS 301 (real-time OS) and manages the resources used by the virtual machine 305, which is the second execution environment. The resource manager 309 can limit the usage of a resource, such as a memory, used by the virtual machine 305, the API 306, the framework module 307, or the additional application 308 to a predetermined amount.

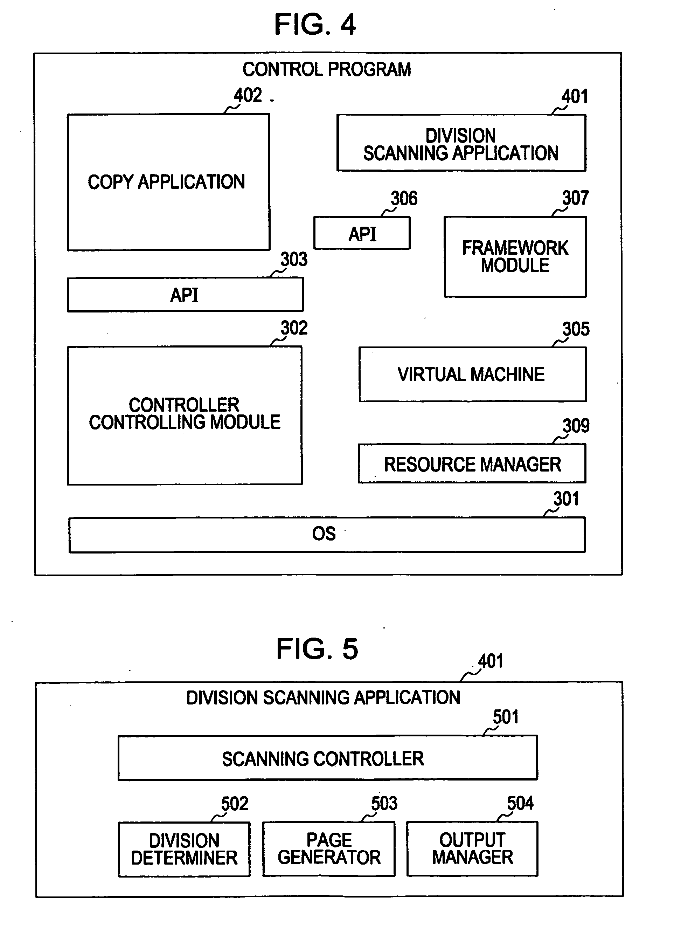

Fig. 4 is a block diagram conceptually showing an example of the software configuration of the control program with a division scanning application being loaded as the additional application 308. A division scanning application 401 is loaded as the additional application 308. A copy application 402 is loaded as the standard application 304 and has a copy function.

Fig. 5 is a block diagram showing an example of the software configuration in the division scanning application 401.

A scanning controller 501 controls the entire division scanning application 401. For example, the scanning controller 501 accesses the controller controlling module 302 via the API 306. The controller controlling module 302 uses a function of the image forming apparatus 100 to cause the reader unit 101 to scan a document page by page. The scanning controller 501 acquires the image data for each page of the scanned document via the controller controlling module 302 and the API 306.

A division determiner 502 determines which page is divided into a secure document from the image data for each page of the document, acquired by the scanning controller 501 via the controller controlling module 302 and the API 306. A page generator 503 generates a secure document and a non-secure document from the image data for the original document on the basis of the result determined by the division determiner 502. An output manager 504 controls the destinations to which the secure document and the non-secure document, generated by the page generator 503, are to be output.

The division scanning application 401 operates on the virtual machine 305, which is the second execution environment, as the additional application 308 in the first embodiment of the present invention. However, the division scanning application 401 may operate on the OS 301 as the standard application 304.

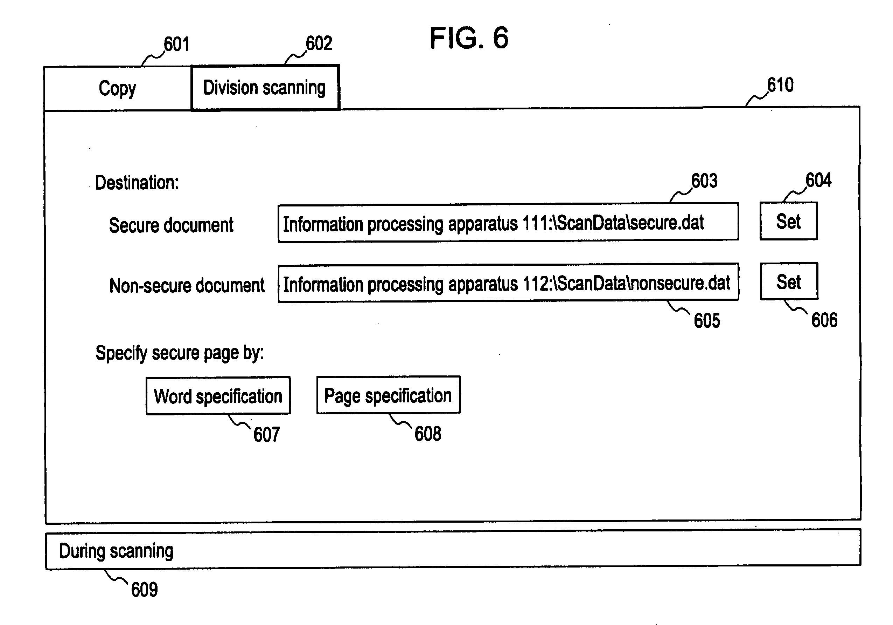

Fig. 6 shows an example of a screen (user interface) displayed in the operating unit 102 in the image forming apparatus 100 according to the first embodiment of the present invention. The screen (user interface) shown in Fig. 6 is used to select the standard application 304 running on the OS 301 (real-time OS) or the additional application 308 running on the virtual machine 305 and execute the selected application. The screen shown in Fig. 6 is a touch panel where a user touches a portion within the frame corresponding to a displayed function to execute the function.

Referring to Fig. 6, application switching keys 601 and 602 are used by the user to select an application. In the screen in Fig. 6, the application switching key 601 corresponds to a "Copy" key 601 used for selecting the copy application 402 as the standard application 304 and the application switching key 602 corresponds to a "Division scanning" key 602 used for selecting the division scanning application 401 as the additional application 308.

The "Copy" key 601 is used to invoke the copy application 402, which is the standard application 304 described above. When the user depresses the "Copy" key 601, a user interface (not shown) for setting the copy function is displayed. The "Division scanning" key 602 is used to read out the setting in the division scanning application 401. When the user depresses the "Division scanning" key 602, a setup screen 610 for the division scanning application 401, as the one shown in Fig. 6, is displayed.

A field 603 is used to specify a destination of the secure document, which is determined to be divided into the secure document by the division determiner 502 after the document set in the reader unit 101 is scanned by the scanning controller 501 and which is generated by the page generator 503.

A "Set" button 604 is depressed by the user to invoke a user interface, described below, used for specifying the destination of the secure document in the field 603.

A field 605 is used to specify a destination of the non-secure document, which is determined to be divided into the non-secure document by the division determiner 502 after the document set in the reader unit 101 is scanned by the scanning controller 501 and which is generated by the page generator 503.

A "Set" button 606 is depressed by the user to invoke a user interface, described below, used for specifying the destination of the non-secure document in the field 605.

A "Word specification" button 607 and a "Page specification" button 608 are used to specify how to determine whether a page is divided into the secure document. The user selects the "Word specification" button 607 or the "Page specification" button 608. The division determiner 502 determines whether the page to be processed is divided into the secure document or the non-secure document on the basis of information indicating the result selected by the user.

A field 609 is an item in which the current status of the division scanning application 401 is displayed. The content of a status concerning the current operation of the division scanning application 401 is displayed in the field 609. In the example in Fig. 6, the status concerning the current operation is "scanning".

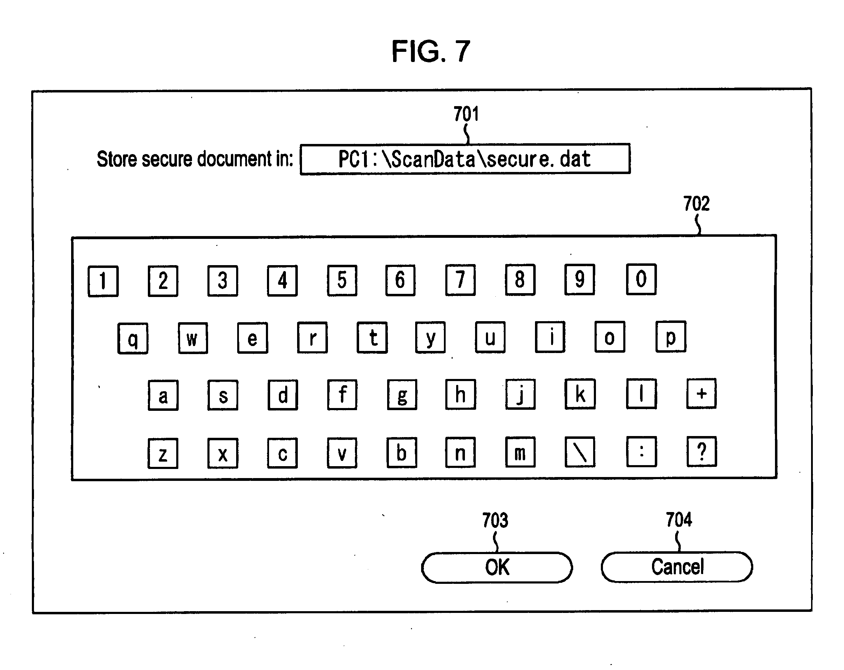

Fig. 7 shows an example of a user interface displayed when the user depresses the "Set" button 604. The user can determine the destination of the secure document with this user interface.

Referring to Fig. 7, the destination of the secure document, specified by the user, is displayed in a field 701. A touch key 702 is used by the user to input the characters representing a desired destination. The characters input with the touch key 702 are sequentially displayed in the field 701. An "OK" button 703 is used to determine the input destination of the secure document. Depression of the "OK" button 703 by the user determines the destination of the secure document. Simultaneously, the determined destination of the secure document is displayed in the field 603 in the screen shown in Fig. 6. A "Cancel" button 704 is used to disable the destination of the non-secure document input with the touch key 702. Depression of the "Cancel" button 704 by the user disables the destination of the secure document.

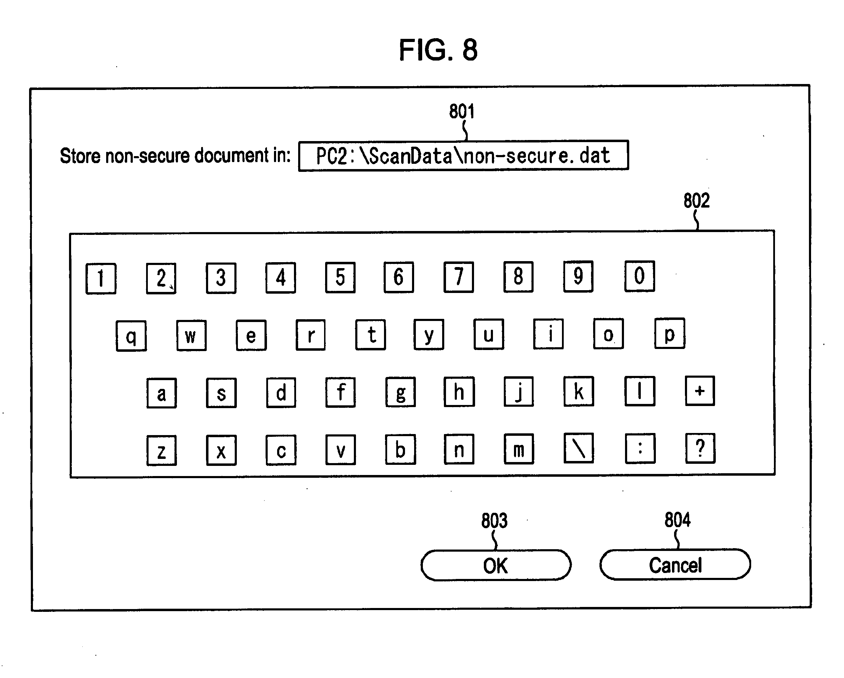

Fig. 8 shows an example of a user interface displayed when the user depresses the "Set" button 606. The user can determine the destination of the non-secure document with this user interface.

Referring to Fig. 8, the destination of the non-secure document, specified by the user, is displayed in a field 801. A touch key 802 is used by the user to input the characters representing a desired destination. The characters input with the touch key 802 are sequentially displayed in the field 801. An "OK" button 803 is used to determine the input destination of the non-secure document. Depression of the "OK" button 803 by the user determines the destination of the non-secure document. Simultaneously, the determined destination of the non-secure document is displayed in the field 605 in the screen shown in Fig. 6. A "Cancel" button 804 is used to disable the destination of the non-secure document input with the touch key 802. Depression of the "Cancel" button 804 by the user disables the destination of the non-secure document.

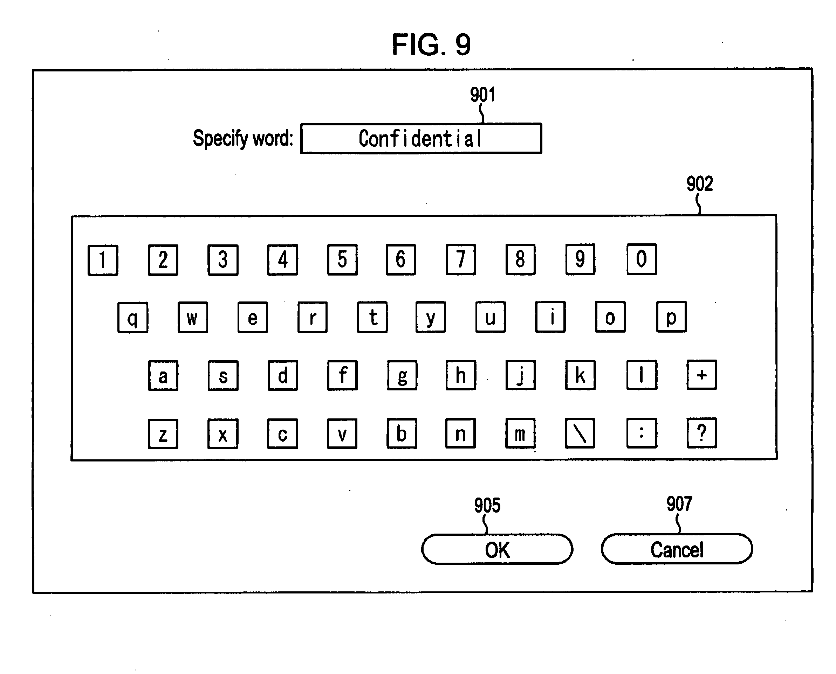

Fig. 9 shows an example of a user interface displayed when the user depresses the "Word specification" button 607. The user can determine the process of specifying a page to be divided into the secure document by the use of a word, with this user interface.

Referring to Fig. 9, a word specified by the user is displayed in a field 901. A touch key 902 is used by the user to input a desired word. The characters input with the touch key 902 are sequentially displayed in the field 901.

An "OK" button 906 is used to determine the word displayed in the field 901. Depression of the "OK" button 906 by the user determines the word specified by the user. A "Cancel" button 907 is used to disable the destination of the secure document input with the touch key 902. Depression of the "Cancel" button 907 by the user disables the word specified by the user.

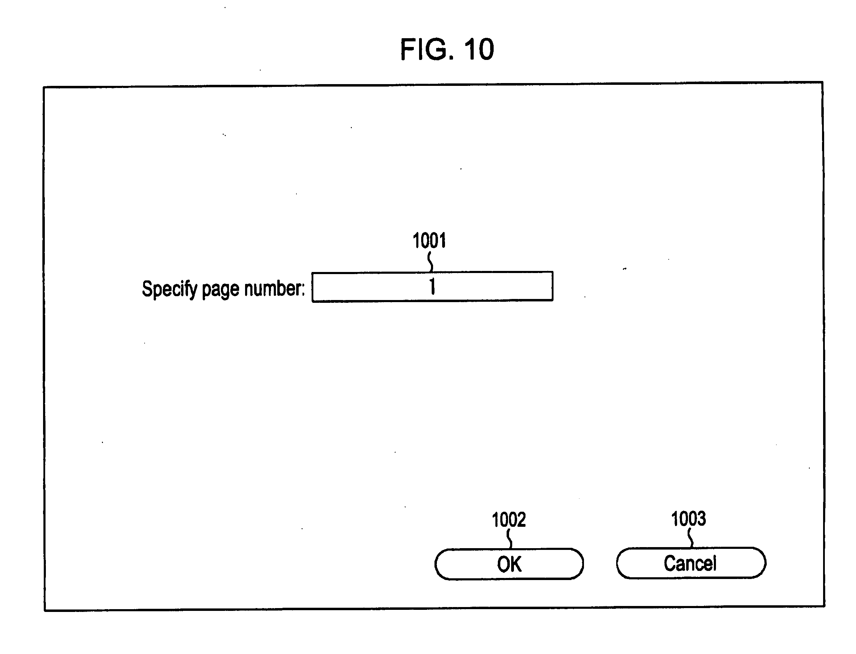

Fig. 10 shows an example of a user interface displayed when the user depresses the "Page specification" button 608. The user can determine the process of specifying a page to be divided into the secure document by the use of a page number, with this user interface.

Referring to Fig. 10, a field 1001 is an area where a page number specified with a ten key (not shown) of the image forming apparatus 100 is displayed.

An "OK" button 1002 is used to determine the page number displayed in the field 1001. Depression of the "OK" button 1002 by the user determines the page having the page number specified by the user to be a page divided into the secure document. A "Cancel" button 1003 is used to disable the page number input in the field 1001. Depression of the "Cancel" button 1003 by the user disables the page number specified by the user.

The division scanning application 401 invokes the API 306 starting a process or setting various parameters when the user depresses a start key which the image forming apparatus 100 is normally provided with to instruct execution of the copy operation while the screen in Fig. 6 is displayed. This invocation causes a device control command to be supplied to the controller controlling module 302 and the division scanning application 401 receives a response to this device control command to perform the division of the pages, described above.

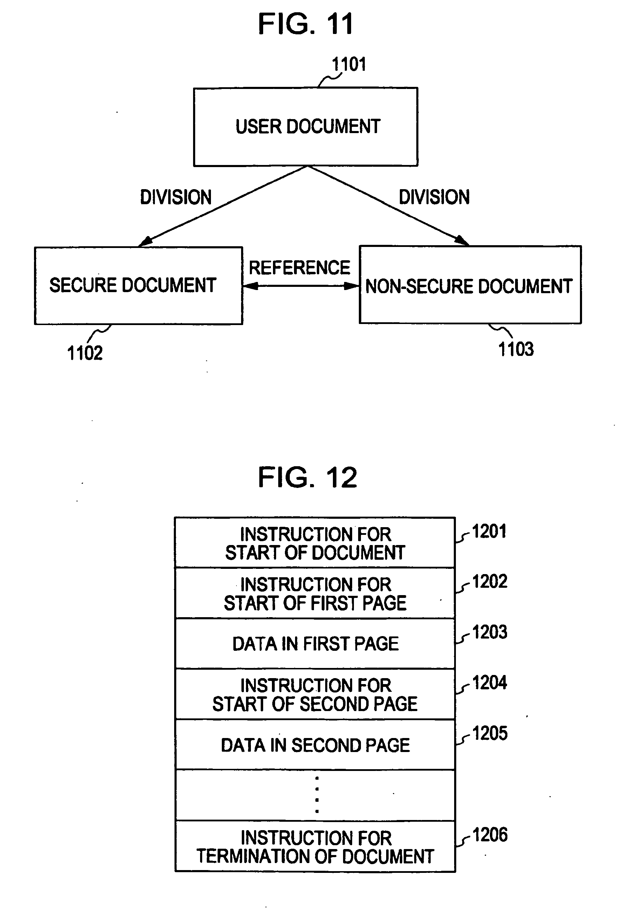

Fig. 11 conceptually shows an example of the structure of a document that is divided into a secure document and a non-secure document by the division scanning application 401. Referring to Fig. 11, a user document 1101 includes multiple pages scanned by the reader unit 101. A secure document 1102 and a non-secure document 1103 result from the division of the user document 1101. Although the secure document 1102 and the non-secure document 1103 are divided from the user document 1101, the divided pages are associated with each other and the secure document 1102 can be referred to from the non-secure document 1103 only if the non-secure document 1103 exists in a predetermined area. Similarly, the non-secure document 1103 can be referred to from the secure document 1102.

Fig. 12 conceptually shows an example of the structure of the secure document 1102 and the non-secure document 1103 shown in Fig. 11.

Referring to Fig. 12, an area 1201 includes an instruction for start of a document. An area 1202 includes an instruction for start of the first page. An area 1203 includes the entity of the first page. For example, image data for the first page of the user document 1101 is stored in the area 1203.

An area 1204 includes an instruction for start of the second page. An area 1205 includes the entity of the second page. For example, image data for the second page of the user document 1101 is stored in the area 1205. Such a document structure is repeated any number of times corresponding to the number of pages. An area 1206 includes an instruction for termination of the document.

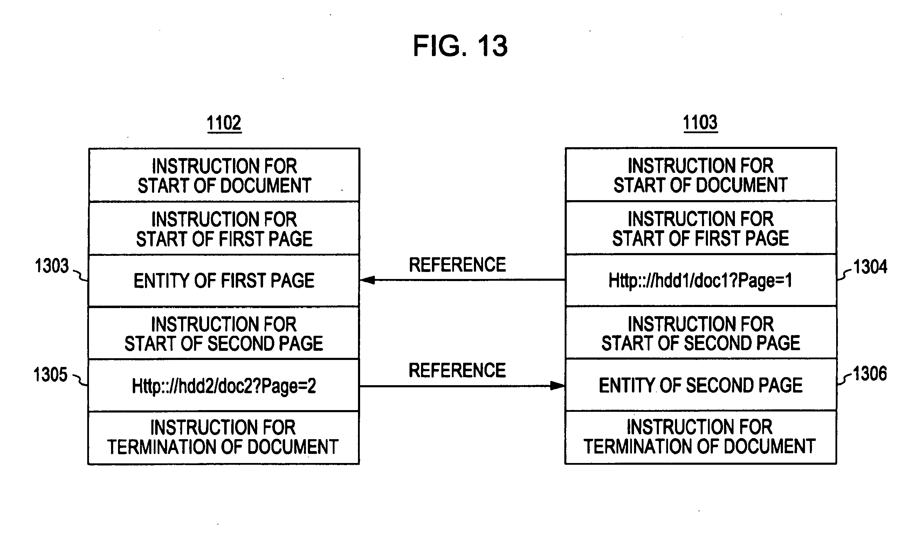

Fig. 13 shows examples of the structures of the secure document 1102 and the non-secure document 1103.

A case in which the first page of the user document 1101 is divided into the secure document and the second page thereof is divided into the non-secure document will be exemplified to describe a method of dividing the pages.

Referring to Fig. 13, an area 1303 includes the image data for the first page. In other words, the entity of the first page is stored in the area 1303. For example, image data indicating the entity of the first page is stored in the area 1303.

An area 1304 includes an instruction to refer to the first page of the secure document 1102. The target of this reference instruction is the area 1303 in which the entity of the first page of the secure document 1102 is stored.

An area 1305 includes an instruction to refer to the second page of the non-secure document 1103. The target of this reference instruction is an area 1306 in which the entity of the second page of the non-secure document 1103 is stored. Image data indicating the entity of the second page of the non-secure document 1103 is stored in the area 1306.

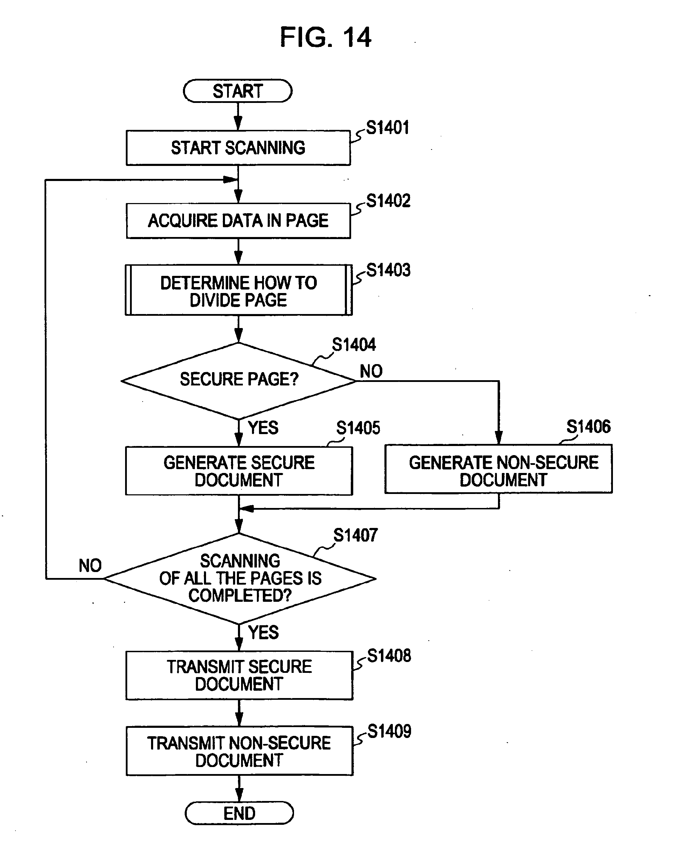

Fig. 14 is a flowchart showing an example of a process performed by the division scanning application 401 according to the first embodiment of the present invention.

First, a user uses the user interfaces shown in Figs. 6 to 8 to specify the respective destinations of the secure document and the non-secure document into which the document is divided after the scanning. After selecting either the "Word specification" button 607 or the "Page specification" button 608, the user uses the user interface shown in Fig. 9 or Fig. 10 to specify how to divide the pages (hereinafter referred to as "a method of dividing the pages", if necessary) and depresses a scanning start button (not shown). This starts the process performed by the division scanning application 401.

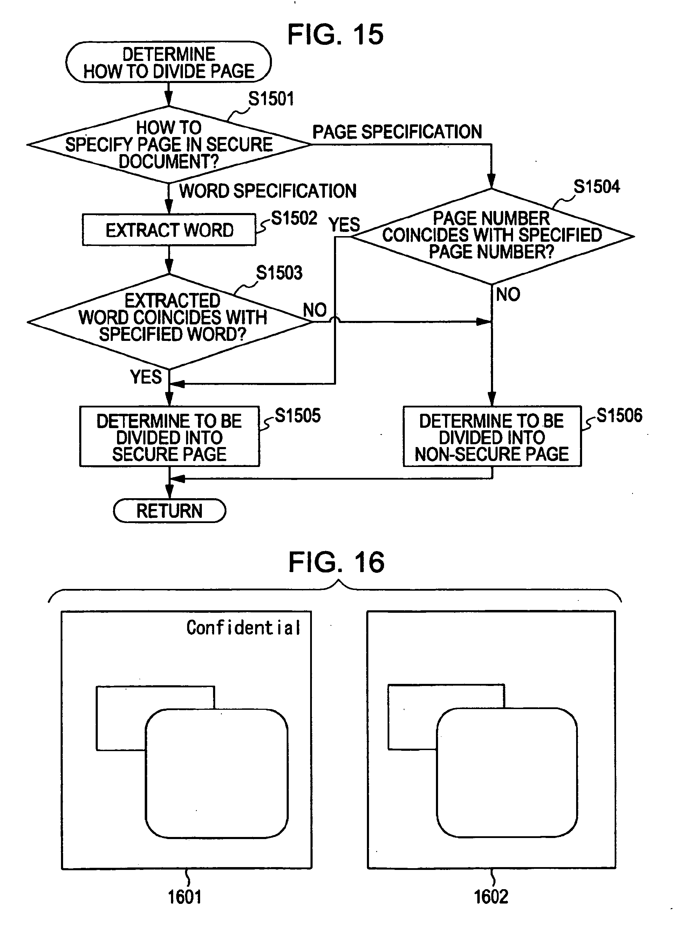

Referring to Fig. 14, in Step S1401, the scanning controller 501 starts scanning of the first page via the API 306. In Step S1402, the scanning controller 501 acquires the readout image data for the first page. In Step S1403, the division determiner 502 determines whether the page is divided into the secure document or the non-secure document in accordance with the information concerning the method of dividing the pages, specified by the user, by a method described below with reference to Fig. 15. If the division determiner 502 determines that the page is divided into the secure document (affirmative in Step S1404), in Step S1405, the page generator 503 generates the secure document 1102.

If the division determiner 502 determines that the page is divided into the non-secure document (negative in Step S1404), in Step S1406, the page generator 503 generates the non-secure document 1103. After the secure document 1102 and the non-secure document 1103 are generated in the above manner, in Step S1407, the scanning controller 501 determines whether scanning of all the pages is completed.

If the scanning of all the pages is completed (affirmative in Step S1407), in Steps S1408 and S1409, the output manager 504 transmits the generated secure document 1102 and non-secure document 1103 to the respective destinations specified by the user.

If the scanning of all the pages is not completed (negative in Step S1407), the scanning controller 501 repeats Steps S1402 to S1407 until the scanning of all the pages is completed.

Fig. 15 is a flowchart showing an example of the process of determining how to divide the pages in Step S1403 in Fig. 14.

Referring to Fig. 15, in Step S1501, the division determiner 502 determines whether the page to be divided into the secure document is specified by the word specification or the page specification on the basis of the user operation of the "Word specification" button 607 or the "Page specification" button 608 in the screen (user interface) shown in Fig. 6.

If the division determiner 502 determines that the page to be divided into the secure document is specified by the word specification, in Step S1502, the division determiner 502 extracts a word from the readout image. Generally, the step of extracting a word is realized, for example, by the use of an optical character reader (OCR) function of the image forming apparatus 100.

In Step S1503, the division determiner 502 determines whether one word in the word sequence extracted in Step S1502 coincides with the word specified by the user with the screen (user interface) shown in Fig. 9. If one word in the word sequence extracted in Step S1502 coincides with the word specified by the user with the screen (user interface) shown in Fig. 9, in Step S1505, the division determiner 502 determines that the page is a secure page. If one word in the word sequence extracted in Step S1502 does not coincide with the word specified by the user with the screen (user interface) shown in Fig. 9, in Step S1506, the division determiner 502 determines that the page is a non-secure page.

If the division determiner 502 determines in Step S1501 that the page to be divided into the secure document is specified by the page specification, in Step S1504, the division determiner 502 determines whether the page number coincides with the page number specified by the user with the screen in Fig. 10. If the division determiner 502 determines that the page number coincides with the page number specified by the user with the screen in Fig. 10 (affirmative in Step S1504), in Step S1505, the division determiner 502 determines that the page is divided into a secure page. If the division determiner 502 determines that the page number does not coincide with the page number specified by the user with the screen in Fig. 10 (negative in Step S1504), in Step S1506, the division determiner 502 determines that the page is a non-secure page.

Although the process of determining how to divide the pages, shown in Fig. 15, is based on the word specification and the page specification in the first embodiment of the present invention, another method may be used to determine a page to be divided into the secure document.

Examples of the first embodiment will now be described in detail with reference to Figs. 6, 9, 13, 14, 15, and 16.

For example, it is presumed that a user sets a document shown in Fig. 16 in the reader unit 101 and sets the division scanning application 401 in the manner shown in Fig. 6.

Referring to Fig. 16, data 1601 for the first page includes a character string "Confidential". In contrast, data 1602 for the second page does not include the character string "Confidential".

Referring to Fig. 6, it is presumed that the destination of the secure document 1102 displayed in the field 603 is set to a file in the information processing apparatus 111 and that the destination of the non-secure document 1103 displayed in the field 605 is set to a file in the information processing apparatus 112. It is also presumed that the user selects the word specification as the method of specifying a page to be divided into the secure document in Fig. 6 and that the user inputs the word "Confidential" in the field 901 in Fig. 9.

When the user depresses the scanning start button (not shown), the division scanning application 401 starts the processing.

As described above, the scanning controller 501 starts the scanning of the data 1601 for the first page via the API 306 in Step S1401, and acquires the readout image data for the first page in Step S1402.

The division determiner 502 determines whether the page to be divided into the secure document is specified by the word specification or the page specification in Step S1501. Since the word specification is selected here, a word is extracted from the readout image data for the first page. As shown in Fig. 16, since the word "Confidential" is extracted from the first page of the document and the extracted word coincides with the word specified by the user with the screen shown in Fig. 9, it is determined that the page is a secure page in Step S1505.

Accordingly, it is determined that the first page of the document is divided into the secure document in Step S1404 in Fig. 14 and page information is generated in the secure document. Since the scanning of all of the pages is not completed at this time point (negative in Step S1407), the readout image data for the second page is acquired in Step S1402.

Since the word specification is selected as the method of specifying a page to be divided into the secure document in Step S1501 in Fig. 15, a word is extracted from the readout image data for the second page. As shown in Fig. 16, since the word "Confidential" is not extracted from the second page of the document, it is determined that the page is a non-secure page in Step S1506.

Accordingly, it is determined that the second page of the document is divided into the non-secure document in Step S1404 in Fig. 14 and page information is generated in the non-secure document. Since the scanning of all the pages is completed (affirmative in Step S1407), the output manager 504 transmits the secure document generated in Step S1405 to the information processing apparatus 111 specified in the field 603 in the screen shown in Fig. 6 in Step S1408. The secure document is stored in the information processing apparatus 111.

Next, the output manager 504 transmits the non-secure document generated in Step S1406 to the information processing apparatus 112 specified in the field 605 in the screen shown in Fig. 6 in Step S1409. The non-secure document is stored in the information processing apparatus 112.

The secure document and the non-secure document have the structures shown in Fig. 13.

Specifically, the first page in the secure document, including the character string "Confidential", is stored as the secure document 1102 and the entity of the first page exists in the area 1303. Since the second page is divided into the non-secure document, the area 1305 includes an instruction to refer to the second page of the non-secure document. In contrast, the second page in the non-secure document, which does not include the character string "Confidential", is stored as the non-secure document 1103 and the entity of the second page exists in the area 1306. Since the first page is divided into the secure document, the area 1304 includes an instruction to refer to the first page of the secure document.

According to the first embodiment of the present invention, the readout image data for the document is divided into the secure document and the non-secure document, and the secure document and the non-secure document are stored in different locations specified by the user with the user interfaces of the image forming apparatus 100. The non-secure document stored in the above manner does not include the entity of the secure pages. Accordingly, the pages in the secure document can be referred to from the non-secure document only if the non-secure document exists in a location where the secure document can be referred to. As a result, it is possible to restrict the network from which the secure document can be browsed.

Since the secure document cannot be referred to from the non-secure document in a network in which reference to the secure document is restricted, it is possible to prevent confidential information from leaking even if, for example, the non-secure document is distributed over a wide area network, such as the Internet 110. The pages in the secure document can be referred to from the non-secure document that exists in an area where reference to the secure document is not restricted.

In addition, since only the secure documents are stored in the file managed as the confidential information, the size of the file managed as the confidential information can be reduced, compared with a case in which all the documents are managed as the confidential information.

Consequently, both reliable protection of the confidential information and easy management of the confidential information can be realized.

Similar results and advantages can be achieved also when the user selects the page specification in the user interface shown in Fig. 6 and selects the first page in the user interface shown in Fig. 10.

Although the user interface shown in Fig. 6 is displayed and the division scanning application 401 is executed each time a scanning job occurs in the reader unit 101 in the first embodiment of the present invention, the first embodiment is not limited to such processing. For example, a system manager may set in advance the settings described in the first embodiment in a manager mode in which the settings of the image forming apparatus 100 are fixed. In this case, the method according to the first embodiment is applicable to all the users who use the image forming apparatus 100 and all the continuous scanning jobs.

### Second Embodiment

A second embodiment of the present invention will be described with reference to the drawings.

According to the first embodiment of the present invention, described above, the secure document is transmitted to and stored in the information processing apparatus 111 connected to the intranet and the non-secure document is transmitted to and stored in the information processing apparatus 112 connected to the Internet 110.

In contrast, according to the second embodiment of the present invention, a firewall is used to protect an image forming apparatus and information processing apparatuses connected to an intranet. The non-secure document can be browsed only with the information processing apparatus connected to the intranet. The secure document is stored in a removable storage unit in the image forming apparatus and the non-secure document is stored in a fixed storage unit in the image forming apparatus. Since the second embodiment differs from the first embodiment only in the method of generating the secure document and the location where the secure document is stored, a detailed description of portions in the second embodiment, similar to the first embodiment, is omitted herein.

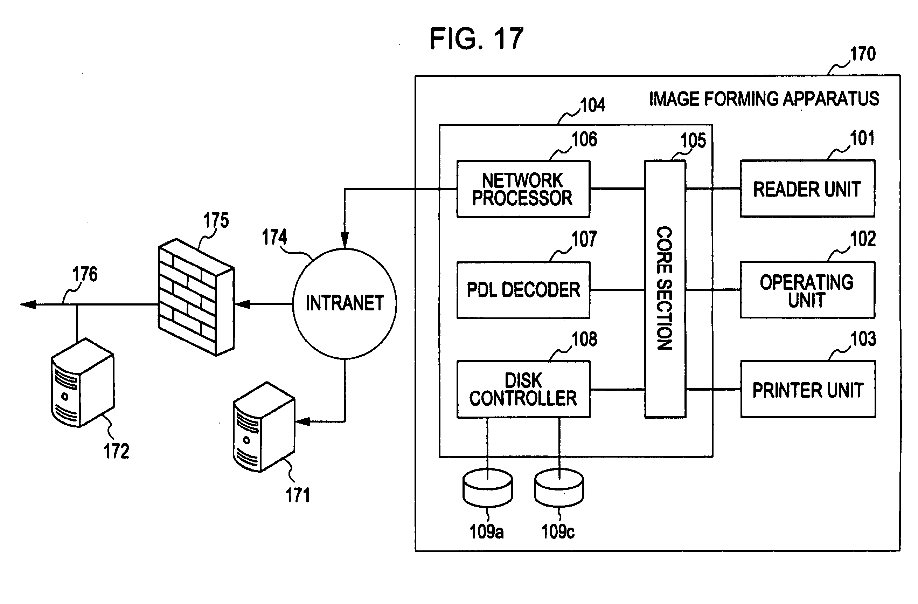

Fig. 17 is a block diagram showing an example of the configuration of a system including an image forming apparatus and computers according to the second embodiment of the present invention.

Referring to Fig. 17, the hardware structure of an image forming apparatus 170 differs from the image forming apparatus 100 according to the first embodiment, shown in Fig. 1, in that the image forming apparatus 170 includes a storage unit 109c, instead of the storage unit 109b. The storage unit 109c in the image forming apparatus 170 according to the second embodiment of the present invention is a removable storage unit. Specifically, the storage unit 109c can be realized by, for example, a removable hard disk conforming to Information Versatile Disk for Removable usage (iVDR) or a flash memory.

The image forming apparatus 170 is connected to an information processing apparatus 171 via an intranet 174. A dedicated firewall machine 175 is provided at a connecting point between the intranet 174 and the Internet 176. The dedicated firewall machine 175 is a computer functioning as a firewall that prevents external unauthorized access to the image forming apparatus 170 and the information processing apparatus 171 connected to the intranet 174.

An information processing apparatus 172 is connected to the Internet 176. The information processing apparatuses 171 and 172 can be realized by, for example, workstations (WSs) or standard personal computers (PCs), as in the first embodiment of the present invention.

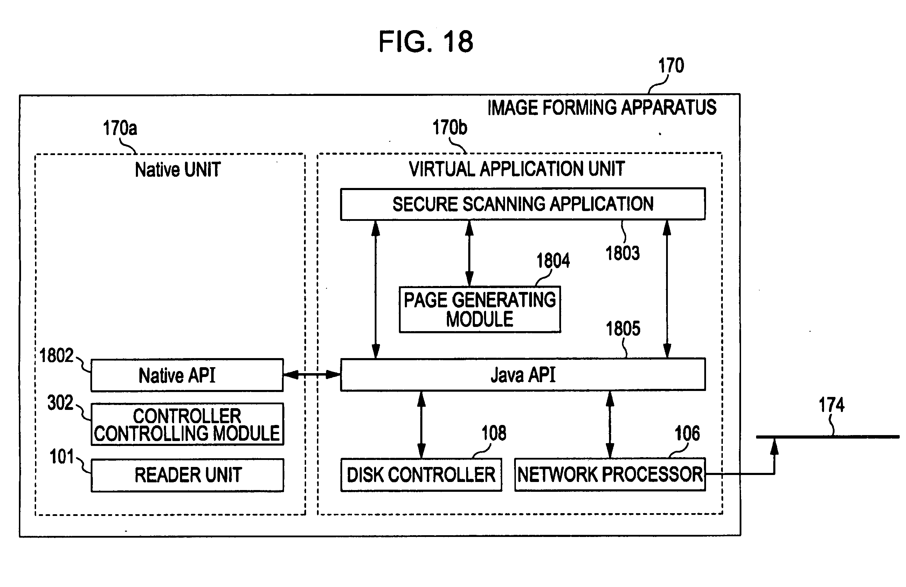

Fig. 18 is a block diagram conceptually showing an example of the relationship between a Native unit 107a and a virtual application unit 170b in the image forming apparatus 170 according to the second embodiment of the present invention.

The Native unit 107a realizes functions which the image forming apparatus 170 is normally provided with. The Native unit 107a includes a reader unit 101, a Native API 1802, and a controller controlling module 302.

The reader unit 101 scans a document set in the image forming apparatus 170 to read out an image of the document. The Native API 1802 accesses the controller controlling module 302 in response to an instruction to the reader unit 101 to scan a document, received from the virtual application unit 170b. The Native API 1802 also supplies the image data for the document scanned by the reader unit 101 to the virtual application unit 170b.

The controller controlling module 302 controls the reader unit 101 so as to read out an image of the document when the Native API 1802 accesses the controller controlling module 302. The controller controlling module 302 supplies the readout image data for the document to the Native API 1802.

The virtual application unit 170b realizes additional functions, for example, which are externally installed in the image forming apparatus 170. The virtual application unit 170b includes a secure scanning application 1803, a page generating module 1804, a Java API 1805, a network processor 106, and a disk controller 108.

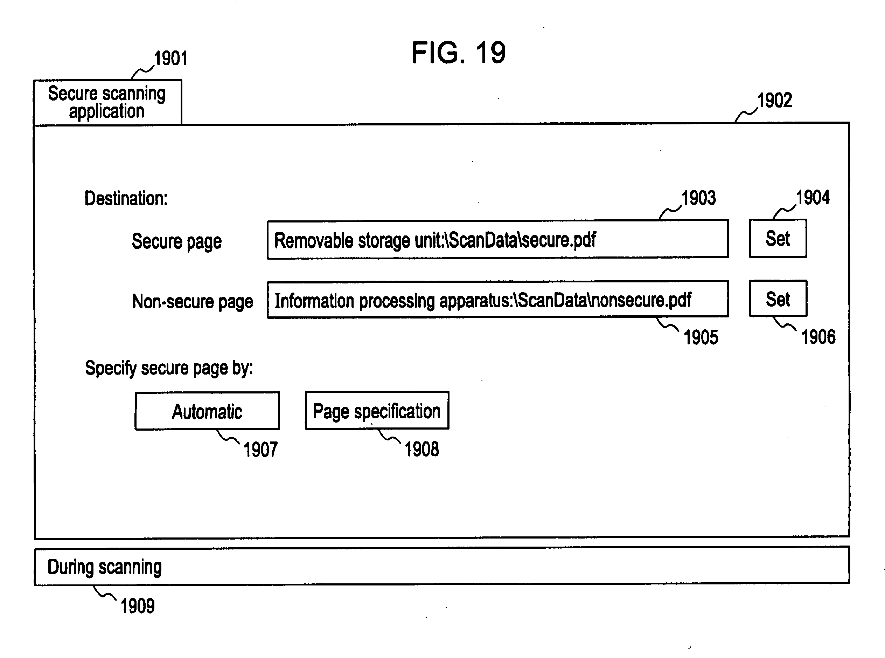

The secure scanning application 1803 is externally installed in the image forming apparatus 170. The secure scanning application 1803 performs the following process in accordance with the content input with a user interface shown in Fig. 19.

The secure scanning application 1803 issues an instruction to scan a document to the Java API 1805. The Java API 1805 supplies the instruction to scan a document to the Native unit 107a.

The secure scanning application 1803 converts the image data for the document scanned by the Native unit 107a into a universal electronic document format. In this example, the image data for the document is converted into PDF, which is an example of the universal electronic document format. The secure scanning application 1803 determines which page is to be divided into the secure document on the basis of the image data for each page of the document scanned by the Native unit 107a.

The secure scanning application 1803 extracts the image data for the page to be divided into the secure document from the image data for the original document on the basis of the determination result and instructs the page generating module 1804 to encrypt the extracted image data. The page generating module 1804 encrypts the image data for the page to be divided into the secure document with, for example, an encryption key included in the page generating module 1804 in response to the instruction to encrypt the extracted image data. Accordingly, the image data for the page to be divided into the secure document is converted into the encrypted PDF data. The encrypted PDF data can be decrypted only by an apparatus having a decryption key corresponding to the encryption key.

The secure scanning application 1803 supplies the encrypted PDF data (the image data for the page to be divided into the secure document) to the Java API 1805. The Java API 1805 performs a process of supplying the encrypted PDF data to a destination specified with the user interface shown in Fig. 19. According to the second embodiment of the present invention, the encrypted PDF data is stored in the removable storage unit 109c. Accordingly, the Java API 1805 supplies the encrypted PDF data to the disk controller 108.

The secure scanning application 1803 supplies an instruction to generate image data for a page to be divided into the non-secure document to the page generating module 1804. The secure scanning application 1803 supplies the generated image data to the Java API 1805. The Java API 1805 performs a process of supplying the image data for the page to be divided into the non-secure document to the destination specified with the user interface shown in Fig. 19. According to the second embodiment of the present invention, the image data for the page to be divided into the non-secure document is stored in the information processing apparatus 171 or the storage unit 109a. Hence, the Java API 1805 supplies the image data for the page to be divided into the non-secure document to the network processor 106 or the disk controller 108.

Fig. 19 shows an example of a screen (user interface) displayed in the operating unit 102 in the image forming apparatus 170 according to the second embodiment of the present invention. The screen (user interface) in Fig. 19 is used to execute the secure scanning application 1803. The screen is a touch panel where a user touches a portion within the frame corresponding to a displayed function to execute the function.

An application selecting key 1901 is used by the user to select the secure scanning application. Depression of the application selecting key 1901 by the user displays a setup screen 1902 for the secure scanning application shown in Fig. 19.

A field 1903 is used to specify a destination of the secure document. A "Set" button 1904 is depressed by the user to invoke a user interface used for specifying a destination of the secure document in the field 1903. This user interface used for specifying a destination of the secure document is, for example, the one shown in Fig. 7. In the screen shown in Fig. 19, the removable storage unit 109c is specified as the destination of the secure document.

A field 1905 is used to specify a destination of the non-secure document. A "Set" button 1906 is depressed by the user to invoke a user interface used for specifying a destination of the non-secure document in the field 1905. This user interface used for specifying a destination of the non-secure document is, for example, the one shown in Fig. 8. In the screen shown in Fig. 19, the information processing apparatus 171 is specified as the destination of the non-secure document.

An "Automatic" button 1907 and a "Page specification" button 1908 are used to specify how to determine whether a page is divided into the secure document. The user selects the "Automatic" button 1907 or the "Page specification" button 1908. The secure scanning application 1803 determines whether the page to be processed is divided into the secure document or the non-secure document on the basis of information indicating the result selected by the user.

When the "Automatic" button 1907 is depressed, a page to be divided into the secure document is automatically specified. Specifically, for example, a page including one or more predetermined words (for example, internal use only, or secret, confidential) is determined to be divided into the secure document or a page having a marker added thereto is determined to be divided into the secure document.

When the "Page specification" button 1908 is depressed, a page to be divided into the secure document is specified by the use of the page number, as in the case where the "Page specification" button 608 in Fig. 6 in the first embodiment is depressed.

A field 1909 is an item in which the current status of the secure scanning application 1803 is displayed. The content of a status concerning the current operation of the secure scanning application 1803 is displayed in the field 609. In the example in Fig. 19, the status concerning the current operation is "scanning".

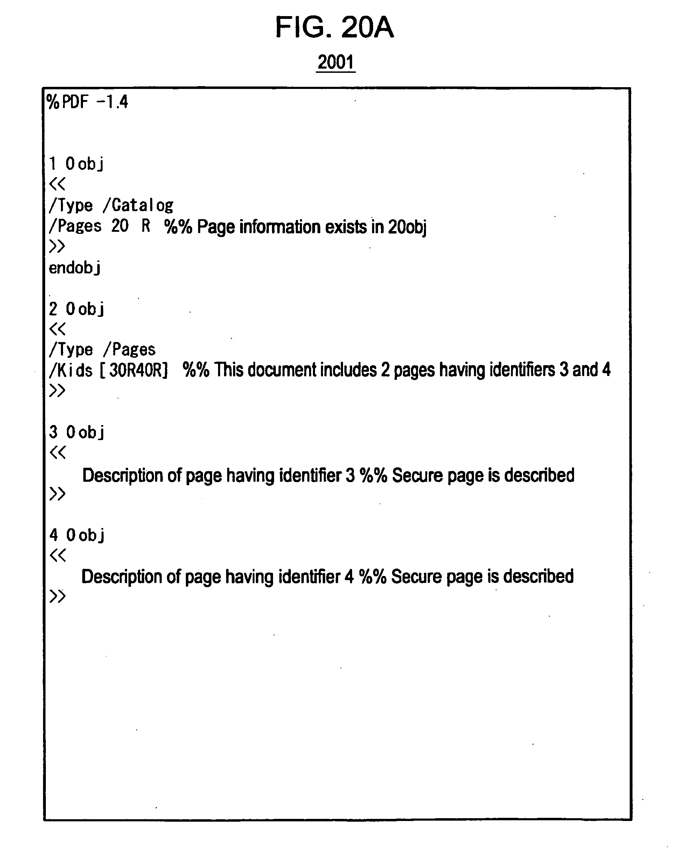

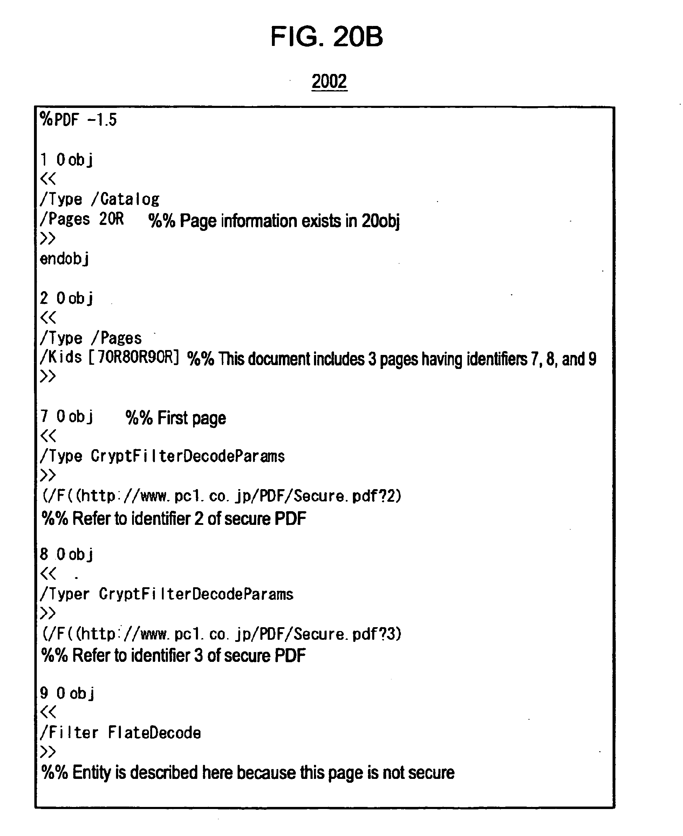

Fig. 20A shows an example of the structure of a secure document 2001. Fig. 20B shows an example of the structure of a non-secure document 2002. In the examples shown in Figs. 20A and 20B, the document has three pages in which the first and second pages are to be divided into the secure document and the third page is divided into the non-secure document. As described above in the first embodiment of the present invention, the secure document is associated with the non-secure document. The non-secure document can be referred to from the secure document and the secure document can be referred to from the non-secure document.

According to the second embodiment of the present invention, the secure document 2001 in Fig. 20A is stored in the removable storage unit 109c and the non-secure document 2002 in Fig. 20B is stored in the information processing apparatus 171.

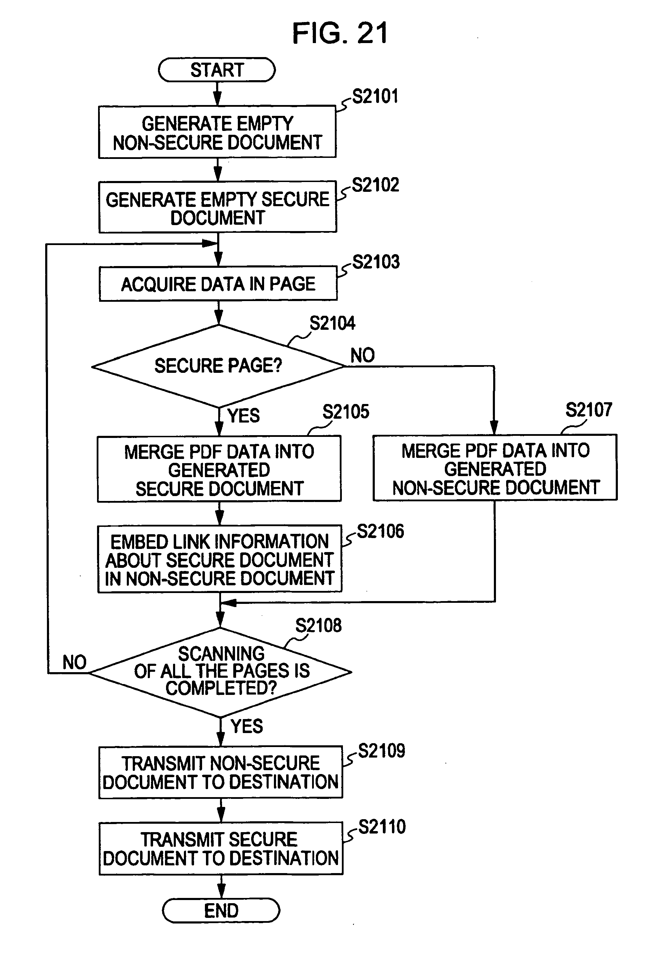

Fig. 21 is a flowchart showing an example of a process performed by the secure scanning application 1803 according to the second embodiment of the present invention.

First, a user uses the user interface shown in Fig. 19 to specify the respective destinations of the secure document and the non-secure document into which the document is divided after the scanning. The user selects either the "Automatic" button 1907 or the "Page specification" button 1908 to select the method of dividing the pages and depresses the scanning start button (not shown). This starts the process performed by the secure scanning application 1803 to start scanning of a document.

In Steps S2101 and 2102, the secure scanning application 1803 generates an empty non-secure document and an empty secure document, respectively. In Step S2103, the secure scanning application 1803 acquires readout image data and converts the acquired image data into, for example, PDF data. In Step S2104, the secure scanning application 1803 determines whether the page is divided into the secure document or the non-secure document in accordance with information concerning the method of dividing the pages, specified by the user. If the secure scanning application 1803 determines that the page is divided into the secure document (affirmative in Step S2104), the secure scanning application 1803 asks the page generating module 1804 to encrypt the PDF data for the page. In Step S2105, the secure scanning application 1803 merges the encrypted PDF data into the secure document generated in Step S2102.

In Step S2106, the secure scanning application 1803 embeds link information about the secure document, used for referring to the PDF data merged in Step S2105, into the non-secure document generated in Step S2101.

If the secure scanning application 1803 determines that the page is divided into the non-secure document (negative in Step S2104), in Step S2107, the secure scanning application 1803 merges the PDF data for the page into the non-secure document generated in Step S2101.

After the PDL date is merged into the secure document and the non-secure document, in Step S2108, the secure scanning application 1803 determines whether the scanning of all the pages is completed. If the secure scanning application 1803 determines that the scanning of all the pages is completed (affirmative in Step S2108), in Steps S2109 and S2110, the secure scanning application 1803 transmits the secure document and the non-secure document to the respective destinations specified by the user.

If the secure scanning application 1803 determines that the scanning of all the pages is not completed (negative in Step S2108), the secure scanning application 1803 repeats Steps S2103 to S2108 until the scanning of all the pages is completed.

As described above, according to the second embodiment of the present invention, the secure document is stored in the removable storage unit 109c removable from the image forming apparatus 170. Accordingly, for example, financial institutions or public offices requiring heavy security have the advantage of removing the removable storage unit 109c, unless access to the removable storage unit 109c is required (for example, after working hours), to safely store the removable storage unit 109c in the vault or the like, in addition to the advantages in the first embodiment of the present invention.

In addition, the secure document and the non-secure document are transmitted only to apparatuses connected to the intranet 174 protected by the dedicated firewall machine 175, and the secure document is encrypted to store the encrypted secure document. As a result, the secure document can be more reliably protected. However, when the security of the secure document is ensured, the secure document need not be encrypted.

The removable storage unit 109c in which the secure document is stored is preferably a highly tamper-resistant storage unit. The "tamper-resistance" means a capability for preventing confidential information from being read out by unauthorized means. It becomes difficult to analyze the internal structure of the storage unit and stored data with the increasing tamper resistance. In order to increase the tamper resistance, a method of making external access difficult to improve the confidentiality or a method of providing a mechanism in which any external access damages the program or data can be adopted.

The former method is exemplified by software that encrypts the program itself and decrypts the encrypted program only as needed for execution. The latter method is exemplified by a memory chip, the recorded content of which is deleted if the surface of the chip is exposed to air, or a circuit that does not operate if a probe used for reading out a signal is mounted.

When the removable storage unit 109c is a highly tamper-resistant storage unit, it is possible to disable decryption of the secure document even if the removable storage unit 109c is stolen from the vault or the like.

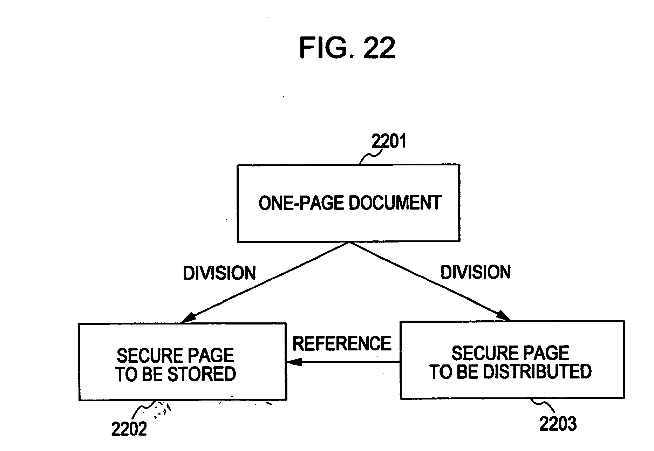

Although the determination of whether the page is divided into the secure document or the non-secure document is performed for every page in the above embodiments of the present invention, a one-page document may be divided. For example, as shown in Fig. 22, a one-page document 2201 may be divided into a secure page 2202 to be stored in the removable storage unit 109c and a non-secure page 2203 to be distributed, for example, to the information processing apparatus 171. Specifically, the determination of whether an area is divided into the secure page 2202 for storage or the non-secure page 2203 for distribution may be based on, for example, a predetermined character or word described in the one-page document 2201. Also in this case, as in the above embodiments, reference to the secure page 2202 for storage from the non-secure page 2203 for distribution is made possible if reference to the secure page 2202 for storage is not restricted.

### Third Embodiment

Although a scanned document is divided into secure parts and non-secure parts to generate the secure document and the non-secure document in the first embodiment of the present invention described above, a document managing apparatus in which an electronic document itself is divided on the basis of security information associated with the electronic document may be realized. Alternatively, a document managing system including one or more computers may be realized.

The electronic document is typified by a PDF file processed by Adobe Reader or Acrobat.

The electronic document includes multiple pages or multiple objects. The objects mean parts, such as texts and images, in each page. The structure of the electronic document may be managed in units of pages or in units of objects because the management in units of pages differs from that in units of objects only in the hierarchical structure. When the structure of the electronic document is managed in units of pages, which objects are arranged is described in each page. When the structure of the electronic document is managed in units of objects, the objects are managed for every object type, such as a text and an image, and the arrangement and position of each object in each page is described in the object.

The electronic document including multiple pages or multiple objects is input as a file in the document managing apparatus or the document managing system. The electronic document can be input as various files including a file that is copied or downloaded from an external server or the like through a network, a PDF file that is converted from an image read out by a scanner by the use of software for the scanner, and a file that is copied or moved from a universal serial bus (USB) memory through a USB interface or the like. The files can be input in the same manner as in the files input in a common OS, such as Windows, and any method of inputting a file of the electronic document can be used.

The security information associated with the electronic document will now be described. The security information is described as one piece of attribute information concerning the electronic document. The security information can be described by, for example, a method of describing all secure attributes and non-secures attribute of pages or objects at once in the attribute file of the electronic document. Alternatively, the security information can be described by a method of describing the secure attributes and non-secure attributes in the attribute information concerning each page in the electronic document or a method of describing the secure attributes and non-secure attributes in the attribute information concerning each object in the electronic document.

The document managing apparatus and the document managing system each include an application that opens the file of the electronic document. In the case of the PDF file, an application program that opens the PDF file, such as Adobe Reader or Acrobat, is included in the document managing apparatus and the document managing system. The "opening of the file of the electronic document" means to bring the electronic document into a state in which the electronic document can be browsed, edited, or printed. The browse, edit, or print may be performed by a human being or may be performed as an internal service of the computer.

The document managing apparatus and the document managing system open the file of the electronic document to determine the security information associated with the electronic document. Alternatively, the security information may be described in comment lines indicating properties of the file. In this case, the security information can be recognized by the OS of the computer even if the file of the electronic document is not opened.

After the file of the electronic document is opened, the electronic document is divided into secure parts and non-secure parts in units of pages or objects in accordance with the attribute information to generate the secure document including the secure parts and the non-secure document including the non-secure parts. Since the subsequent processing is the same as in the first embodiment, a detailed description is omitted herein.

The secure document may include only the secure pages and the non-secure document may include only the non-secure pages. Alternatively, when the electronic document is divided into the secure parts and the non-secure parts in units of objects, only the secure objects may be arranged in each page of the secure document and only the non-secure objects may be arranged in each page of the non-secure document.

### Other Embodiments

The processes shown in Figs. 14, 15, and 21 according to the above embodiments are performed by the image forming apparatus by the use of programs externally installed. In this case, the present invention is applicable to a case in which an information group including the programs is supplied from an external computer by the use of a storage medium, such as a compact disc-read only memory (CD-ROM), a flash memory, or a flexible disk (FD), or over a network.

As described above, the present invention can be embodied by supplying a storage medium having the program code of software realizing the functions according to the above embodiments to a system or an apparatus or downloading the program code of the software from an external server, the control unit (the CPU or the micro processing unit (MPU)) in which system or apparatus reads out and executes the program code, which is stored in the storage medium or is downloaded.

In this case, the program code itself read out from the storage medium realizes the functions of the embodiments described above. The present invention is applicable to the storage medium having the program code stored therein. The storage medium supplying the program code may be any storage medium, such as a floppy disc®, a hard disk, an optical disk, a magneto-optical disk, a digital versatile disc (DVD), a CD-ROM, a magnetic tape, a nonvolatile memory card, a read only memory (ROM), or an electronically erasable and programmable read only memory (EEPROM).

The CPU that executes the readout program code realizes the functions of the embodiments described above. In addition, the operating system (OS) or the like running on the image forming apparatus may execute all or part of the actual processing on the basis of the instructions in the program code to realize the functions of the embodiments described above. Alternatively, after the program code read out from the storage medium has been written in a memory that is provided in an expansion board included in the image forming apparatus or in an expansion unit connected to the computer, the CPU or the like in the expansion board or the expansion unit may execute all or part of the actual processing on the basis of instructions in the program code to realize the functions of the embodiments described above.

While the present invention has been described with reference to exemplary embodiments, it is to be understood that the invention is not limited to the disclosed exemplary embodiments.

## Claims

1. An image processing apparatus comprising:
a reading unit (101) arranged to read out image data for a document ;
a determination unit (502) arranged to determine how to divide the document into secure parts or non-secure parts;
a dividing unit (501, 502) arranged to divide the image data for the document, read out by the reading unit in accordance with the determination by said determination unit, into the secure parts and the non-secure parts;
the image processing apparatus being **characterized by** comprising:
a secure document generating unit (503) arranged to generate a secure document from the secure parts;
a non-secure document generating unit (503) arranged to generate a non-secure document from the non-secure parts;
a storage unit (109, 111, 112) arranged to store the secure document in a first storage device and to store the non-secure document in a second storage device, and
wherein the secure document includes reference information to a page of the non-secure document, and the non-secure document includes reference information to a page of the secure document.

2. The image processing apparatus according to Claim 1, wherein the first storage device is a removable storage device (109c) that is removable from the image processing apparatus.

3. The image processing apparatus according to Claim 2, wherein the second storage device is a storage device that is physically different from the removable storage device.

4. The image processing apparatus according to any preceding claim, wherein the first storage device is tamper-resistant.

5. The image processing apparatus according to any preceding claim,
wherein the non-secure document generating unit generates the non-secure document including data concerning the non-secure parts and data concerning the locations where the secure parts are stored.

6. The image processing apparatus according to any preceding claim,
wherein the dividing unit divides the pages in the image data for the document, read out by the reading unit, into secure pages and non-secure pages.

7. An image managing method including the step of reading out image data for a document ;
determining how to divide the document into secure parts or non-secure parts
dividing the readout image data for the document into secure parts and non-secure parts in accordance with the determination made in said determining step;
the image managing method being **characterized by** comprising the steps of:
generating a secure document from the secure parts;
generating a non-secure document from the non-secure parts; and
storing the secure document in a first storage device and storing the non-secure document in a second storage device,
wherein the secure document includes reference information to a page of the non-secure document, and the non-secure document includes reference information to a page of the secure document.

8. The image managing method according to Claim 7,
wherein the storage step stores the secure document in a removable storage unit that is removable from an image processing apparatus.

9. The image managing method according to Claim 8,
wherein the storage step stores the non-secure document in a storage unit that is physically different from the removable storage unit.

10. The image managing method according to Claim 7,
wherein the first storage device is tamper-resistant.

11. The image managing method according to any one of claims 8 to 10,
wherein the non-secure document generating step generates the non-secure document including data concerning the non-secure parts and data concerning the locations where the secure parts are stored.

12. The image managing method according to any one of claims 8 to 11,
wherein the dividing step divides the pages in the readout image data for the document into secure pages and non-secure pages.

13. A computer program comprising instructions which when executed on a computer control the computer to perform the method as claimed in any one of claims 7 to 12.

14. A storage medium storing a computer program as claimed in claim 13.

## Patentansprüche

1. Bildverarbeitungsvorrichtung, umfassend:
eine Leseeinheit (101), ausgebildet zum Auslesen von Bilddaten für ein Dokument;
eine Bestimmungseinheit (502), ausgebildet zum Bestimmen, wie das Dokument in sichere Teile und nicht-sichere Teile zu unterteilen ist;
eine Unterteilungseinheit (501, 502), ausgebildet zum Unterteilen der Bilddaten für das Dokument, die von der Leseeinheit ausgelesen wurden, nach Maßgabe der durch die Bestimmungseinheit vorgenommenen Bestimmung, in sichere Teile und nicht-sichere Teile, wobei die Bildverarbeitungsvorrichtung **gekennzeichnet ist durch**:
eine Sicheres-Dokument-Erzeugungseinheit (503), ausgebildet zum Erzeugen eines sicheren Dokuments aus den sicheren Teilen;
eine Nicht-Sicheres-Dokument-Erzeugungseinheit (503), ausgebildet zum Erzeugen eines nicht-sicheren Dokuments aus den nicht-sicheren Teilen;
eine Speichereinheit (109, 111, 112), ausgebildet zum Speichern des sicheren Dokuments in einer ersten Speichereinrichtung und zum Speichern des nicht-sicheren Dokuments in einer zweiten Speichereinrichtung, und
wobei das sichere Dokument Referenzinformation zu einer Seite des nicht-sicheren Dokuments enthält und das nicht-sichere Dokument Referenzinformation zu einer Seite des sicheren Dokuments enthält.

2. Vorrichtung nach Anspruch 1, wobei die erste Speichereinrichtung eine lösbare Speichereinrichtung (109c) ist, die von der Bildverarbeitungsvorrichtung lösbar ist.

3. Vorrichtung nach Anspruch 2, wobei die zweite Speichereinrichtung eine Speichereinrichtung ist, die sich physisch von der lösbaren Speichereinrichtung unterscheidet.

4. Vorrichtung nach einem vorhergehenden Anspruch, wobei die erste Speichereinrichtung fälschungssicher ist.

5. Vorrichtung nach einem vorhergehenden Anspruch, wobei die Nicht-Sicheres-Dokument-Erzeugungseinheit das nicht-sichere Dokument erzeugt, welches Daten über die nicht-sicheren Teile sowie Daten enthält, welche die Stellen betreffen, an denen die sicheren Teile gespeichert sind.

6. Vorrichtung nach einem vorhergehenden Anspruch, wobei die Unterteilungseinheit die Seiten in den von der Leseeinheit ausgelesenen Bilddaten für das Dokument in sichere Seiten und nicht-sichere Seiten unterteilt.

7. Bildverwaltungsverfahren, enthaltend den Schritt des Auslesens von Bilddaten für ein Dokument;
Bestimmen, wie das Dokument in sichere Teile und nicht-sichere Teile zu unterteilen ist,
Unterteilen der ausgelesenen Bilddaten für das Dokument in sichere Teile und nicht-sichere Teile nach Maßgabe der im Bestimmungsschritt erfolgten Bestimmung;
wobei das Bildverwaltungsverfahren durch folgende Schritte
**gekennzeichnet** ist:
Erzeugen eines sicheren Dokuments aus den sicheren Teilen;
Erzeugen eines nicht-sicheren Dokuments aus den nicht-sicheren Teilen; und
Speichern des sicheren Dokuments in einer ersten Speichereinrichtung und Speichern des nicht-sicheren Dokuments in einer zweiten Speichereinrichtung,
wobei das sichere Dokument Referenzinformation zu einer Seite des nicht-sicheren Dokuments und das nicht-sichere Dokument Referenzinformation zu einer Seite des sicheren Dokuments enthält.

8. Verfahren nach Anspruch 7, wobei der Speicherschritt das sichere Dokument in einer lösbaren Speichereinheit speichert, die von einer Bildverarbeitungsvorrichtung lösbar ist.

9. Verfahren nach Anspruch 8, wobei der Speicherschritt das nicht-sichere Dokument in einer Speichereinheit speichert, die sich physisch von der lösbaren Speichereinheit unterscheidet.

10. Verfahren nach Anspruch 7, wobei die erste Speichereinrichtung fälschungssicher ist.

11. Verfahren nach einem der Ansprüche 8 bis 10, wobei der Schritt zum Erzeugen des nicht-sicheren Dokuments das nicht-sichere Dokument erzeugt, welches Daten über nicht-sichere Teile sowie Daten enthält, welche die Stellen betreffen, an denen die sicheren Teile gespeichert sind.

12. Verfahren nach einem der Ansprüche 8 bis 11, wobei der Unterteilungsschritt die Seiten in den ausgelesenen Bilddaten für das Dokument in sichere Seiten und nicht-sichere Seiten unterteilt.

13. Computerprogramm mit Befehlen, die bei Ausführung auf einem Computer diesen steuern, so dass er das Verfahren nach einem der Ansprüche 7 bis 12 ausführt.

14. Speichermedium, das ein Computerprogramm nach Anspruch 13 speichert.

## Revendications

1. Appareil de traitement d'image comprenant :
une unité (101) de lecture agencée pour lire des données d'image pour un document ;
une unité (502) de détermination agencée pour déterminer comment découper le document en parties sécurisées ou parties non sécurisées ;
une unité (501, 502) de découpage agencée pour découper les données d'image pour le document, lues par l'unité de lecture en fonction de la détermination par ladite unité de détermination, en parties sécurisées et parties non sécurisées ;
l'appareil de traitement d'image étant **caractérisé en ce qu'**il comprend :
une unité (503) génératrice de document sécurisé agencée pour engendrer, à partir des parties sécurisées, un document sécurisé ;
une unité (503) génératrice de document non sécurisé agencée pour engendrer, à partir des parties non sécurisées, un document non sécurisé ;
une unité (109, 111, 112) de mémorisation agencée pour mémoriser le document sécurisé dans un premier dispositif de mémorisation et pour mémoriser le document non sécurisé dans un second dispositif de mémorisation, et
dans lequel le document sécurisé inclut de l'information de référence à une page du document non sécurisé, et le document non sécurisé inclut de l'information de référence à une page du document sécurisé.

2. Appareil de traitement d'image selon la revendication 1, dans lequel le premier dispositif de mémorisation est un dispositif amovible (109c) de mémorisation qui est amovible par rapport à l'appareil de traitement d'image.

3. Appareil de traitement d'image selon la revendication 2, dans lequel le second dispositif de mémorisation est un dispositif de mémorisation qui est physiquement différent du dispositif amovible de mémorisation.

4. Appareil de traitement d'image selon l'une quelconque des revendications précédentes, dans lequel le premier dispositif de mémorisation est infalsifiable.

5. Appareil de traitement d'image selon l'une quelconque des revendications précédentes, dans lequel l'unité génératrice de document non sécurisé engendre le document non sécurisé incluant des données concernant les parties non sécurisées et des données concernant les emplacements où sont mémorisées les parties sécurisées.

6. Appareil de traitement d'image selon l'une quelconque des revendications précédentes, dans lequel l'unité de découpage découpe, en pages sécurisées et pages non sécurisées, les pages des données d'image pour le document, lues par l'unité de lecture.

7. Procédé de gestion d'image incluant l'étape de lecture de données d'image pour un document ;
de détermination d'une façon de découper le document en parties sécurisées ou parties non sécurisées ;
de découpage des données d'image lues pour le document en parties sécurisées et parties non sécurisées, en fonction de la détermination faite à ladite étape de détermination, ;
le procédé de gestion d'image étant **caractérisé en ce qu'**il comprend les étapes :
de génération, à partir des parties sécurisées, d'un document sécurisé ;
de génération, à partir des parties non sécurisées, d'un document non sécurisé ;
de mémorisation du document sécurisé dans un premier dispositif de mémorisation et de mémorisation du document non sécurisé dans un second dispositif de mémorisation, et
dans lequel le document sécurisé inclut de l'information de référence à une page du document non sécurisé, et le document non sécurisé inclut de l'information de référence à une page du document sécurisé.

8. Procédé de gestion d'image selon la revendication 7, dans lequel l'étape de mémorisation mémorise le document sécurisé dans une unité amovible de mémorisation qui est amovible par rapport à un appareil de traitement d'image.

9. Procédé de gestion d'image selon la revendication 8, dans lequel l'étape de mémorisation mémorise le document non sécurisé dans une unité de mémorisation de mémorisation qui est physiquement différente de l'unité amovible de mémorisation.

10. Procédé de gestion d'image selon la revendication 7, dans lequel le premier dispositif de mémorisation est infalsifiable.

11. Procédé de gestion d'image selon l'une quelconque des revendications 8 à 10, dans lequel l'étape de génération de document non sécurisé engendre le document non sécurisé incluant des données concernant les parties non sécurisées et des données concernant les emplacements où sont mémorisées les parties sécurisées.

12. Procédé de gestion d'image selon l'une quelconque des revendications 8 à 11, dans lequel l'étape de découpage découpe, en pages sécurisées et pages non sécurisées, les pages des données d'image lues pour le document.

13. Programme informatique comprenant des instructions qui lorsqu'elles sont exécutées sur un processeur commandent le processeur pour mettre en oeuvre le procédé selon l'une quelconque des revendications 7 à 12.

14. Support de mémorisation mémorisant un programme informatique selon la revendication 13.
